**Europäisches Patentamt**

**European Patent Office**

**Office européen des brevets**

(19)

(11) Veröffentlichungsnummer : **0 136 453 B2**

# (12) NEUE EUROPÄISCHE PATENTSCHRIFT

(45) Veröffentlichungstag der neuen Patentschrift :
26.08.92 Patentblatt 92/35

(51) Int. Cl.$^5$ : **H05B 6/78**, F24C 7/02

(21) Anmeldenummer : **84108961.8**

(22) Anmeldetag : **28.07.84**

(54) Verfahren und Vorrichtung zum Erwärmen von Objekten mittels Mikrowellen.

(30) Priorität : **17.11.83 DE 3341585
24.03.84 DE 3411017
21.05.84 DE 3418843
10.08.83 DE 3333695
14.12.83 DE 3345150
12.06.84 DE 3421778**

(43) Veröffentlichungstag der Anmeldung :
**10.04.85 Patentblatt 85/15**

(45) Bekanntmachung des Hinweises auf die
Patenterteilung :
**31.05.89 Patentblatt 89/22**

(45) Bekanntmachung des Hinweises auf die
Entscheidung über den Einspruch :
**26.08.92 Patentblatt 92/35**

(84) Benannte Vertragsstaaten :
**AT BE CH DE FR GB IT LI LU NL SE**

(56) Entgegenhaltungen :
**CH-A- 455 081
CH-A- 506 029
DE-A- 2 242 031
DE-A- 2 704 563
DE-C- 1 952 987
US-A- 3 465 114
US-A- 3 619 536
US-A- 3 809 844**

(73) Patentinhaber : **SNOWDRIFT CORP. N.V.
De Ruyterkade 62
Curaçao (AN)**

(72) Erfinder : **Fritz, Karl, Dr.(verstorben)
(DE)**

(74) Vertreter : **Schmitt, Hans, Dipl.-Ing. et al
Patentanwälte Dipl.-Ing H. Schmitt Dipl.-Ing.
W. Maucher Dreikönigstrasse 13
W-7800 Freiburg (DE)**

Jouve, 18, rue Saint-Denis, 75001 PARIS

## Beschreibung

Die Erfindung betrifft ein Verfahren und eine Vorrichtung zum Erwärmen von luftdicht verpackten Objekten mittels Mikrowellen unter Einfluß von äußerem Uberdruck mittels wenigstens zweier Hochfrequenzeinstrahlungen.

Aus der CH-A-455 081 ist ein Verfahren zum Erwärmen eines Mikrowellen-Raumes mit wenigstens zwei Hochfrequenzeinstrahlungen bekannt, wobei es jedoch darum geht, innerhalb dieses Raumes eine möglichst gleichmäßige Intensität der Beheizung durch das Hochfrequenzfeld herbeizuführen. Ein äußerer Uberdruck wird dabei auf die in diesem Raum befindlichen Objekte nicht ausgeübt.

Für luftdicht verpackte Objekte ergeben sich insbesondere bei Erwärmung über etwa 80° C Probleme, weil die Verpackung bei zunehmender Temperatur einem steigenden Innendruck ausgesetzt ist, der schließlich auch zum Zerreißen der Verpackung führen kann. Erwärmungen über 80°C sind aber z. B. bei Sterilisationsvorgängen erforderlich. Es sind deshalb auch schon Mikrowellen-Vorrichtungen geschaffen worden, bei denen die Erwärmung der Objekte unter äuberem Uberdruck stattfindet.

So werden bei der US-PS-3 809 844 verpackte Objekte durch ein Transportrohr geschickt, wobei der notwendige Uberdruck durch Druckwasser geliefert wird. Nachteilig ist hierbei, daß für eine zumindest naherungweise homogene Erwärmung die Objekte sehr klein sein müssen. Trotzdem gibt es hier insbesondere in den Eck- und Kantenbereichen Schwierigkeiten der Homogenisierung. Durch zusätzliche Maßnahmen, insbesondera durch Erwärmung des umgebenden Wassers wird deshalb versucht, diese Unzulänglichkeiten auszugleichen. Es ist somit neben der Erwärmung mittels Mikrowellen notwendig, einen Temperaturausgleich durch konventionelle Wärmeleitung über flüssige oder gasförmige Zwischenmittel zu erreichen.

Es besteht deshalb die Aufgabe, ein Verfahren der eingangs erwähnten Art zu schaffen, bei welchem bei unterschiedlichen Objekten sowohl hinsichtlich der Konsistenz als auch Größe, Form und Material sowie Menge pro Zeiteinheit, auf einfache Weise ein Sterilisieren mit Hilfe von Mikrowellen unter Druck durchgeführt werden kann. Dabei soll eine schnelle, gezielte Erhitzung mit Hilfe der Mikrowellen möglich sein, wobei die Forderung nach einem äußeren Druck als Gegendruck gegen den durch die Erwärmung entstehenden Innendruck erfüllt werden kann.

Die Lösung der Aufgabe erfolgt mit den kennzeichnenden Merkmalen der Ansprüche 1 und 2.

Es wird also das Gegenteil einer möglichst gleichmäßigen Intensität der Beheizung eines ganzen Mikrowellen-Raumes, nämlich eine ganz gezielte Erwärmung angestrebt. Dabei ergibt sich durch die Bestrahlung aus wenigstens zwei Richtungen die Möglichkeit einer hohen Energiekonzentration in Teilen oder im gesamten zu erwärmenden Objekt, was aufgrund dieser Verfahrensweise bedarfsweise eingestellt werden kann. Dabei wird durch Interferenz der Strahlung aus den zwei verschiedenen Strahlungsquellen die erforderliche Feldverteilung innerhalb des metallisch abgeschlossenen Arbeitsraumes unter Druck ermöglicht.

Eine besonders vorteilhafte Weiterbildung der Erfindung sleht vor, daß die Objekte nach dem Erwärmen durch Zuführen eines Kühlmediums mindestens mit dem das Objekt umgebenden Druck, vorzugsweise im wesentlichen unmittelbar gekühlt werden. Die Objekte können dadurch sehr schnell wieder auf eine gewünschte Temperatur abgekühlt werden, wobel gleichzeitig eine Verminderung des Innendruckes bewirkt wird.

Die Erfindung betrifft auch eine Vorrichtung zum Erwärmen von Objekten mittels Mikrowellen und vorzugsweise unter Einfluß von äuberem Uberdruck, wobei die Vorrichtung wenigstens einen in einem insbesondere druckdichten, metallisch begrenzten Arbeitsraum einstrahlenden Mikrowellensender, insbesondere ein Magnetron und mindestens zwei Strahlungs-Eintritte aufweist, um das vorstehend Beschilderte Verfahren durchführen zu können.

Diese Vorrichtung ist erfindungsgemäß durch die Merkmale des Anspruchs 9 gekennzeichnet.

Wie bereits in Verbindung mit dem erfindungsgemäßen Verfahren vorbeschrieben, ergeben sich dadurch insbesondere Vorteile hinsichtlich einer gewünschten Feld- bzw. Temperaturverteilung im zu erwärmenden Objekt.

Eine Ausführungsform sieht vor, daß der Arbeitsraum durch eine metallische Bodenplatte sowie ein darauf luftdicht aufsetzbares, haubenartiges Gehäuseteil aus Metall umgrenzt ist, das die Einstrahlungs-Eintrinsöffnungen durch Eintrinsfenster in der Bodenplatte gebildet sind, die durch eine strahlendurchlässige Abdeckung luftdicht verschlossen sind und wobei sich die Fenster bei den Endbereichen der Längserstreckung des Arbeitsraumes befinden. Ein solcher Arbeitsraum bildet eine druckdichte Umgrenzung des zu erwärmenden Objektes, wobei durch die Anordnung der Einstrahlstellen am Arbeitsraum etwa an den Enden seiner Längserstreckung sich der Arbeitsraum etwa in Längsresonanz befindet.

Eine abgewandelte Ausführungsform sieht vor. daß wenigstens ein ringförmiger Hohlleiter mit symmetrisch zueinander liegenden Ein- und Auskoppelstellen vorgesehen ist, wobei der druckdichte Arbeitsraum durch einen Teil dieses Hohlleiters bei der Auskoppelstelle gebildet ist. Durch diese Konstruktion kann bereits mit einem einzigen Mikrowellensender eine Bestrahlung eines zu erwärmenden Objektes von zwei gegenüberliegenden Seiten aus vorgenommen werden. Dies stellt somit eine besonders einfache Ausführungsform dar.

Eine weitere erfindungsgemäße Ausführungsform sieht vor, daß der Arbeitsraum im wesentlichen durch ein Metallrohr mit strahlendurchlässigen, aber druckdicht verschlossenen Fenstereinschnitten für die Mikrowellenstrahlung gebildet ist, und daß zur Abdichtung der Fenstereinschnitte ein innenoder außenseitig am Metallrohr anliegendes Kunststoffrohr, vorzugsweise aus PTFE vorgesehen ist. Diese Anordnung eignet sich besonders gut für einen "Durchlaufbetrieb", insbesondere zur Erwärmung größerer Objektmengen in Zylinder- oder Flaschenform od. dgl., wie sie vor allem in der Pharmaindustrie gebräuchlich sind.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt:

Fig. 1 eine Schnindarstellung eines Arbeitsraumes mit darin befindlichem, zu erwärmendem Objekt und zwei an diesen Arbeitsraum angeschlossenen Mikrowellensendern,

Fig. 2 eine Seitenansicht eines Arbeitsraumes mit einer als Transportband ausgebildeten Transporteinrichtung zum Zuführen von Objekten zu dem Arbeitsraum,

Fig. 3 eine Seitenansicht eines ringförmigen Hohlleiters mit symmetrisch zueinander liegenden Ein- und Auskoppelstellen,

Fig. 4 eine Querschnittsdarstellung der in Fig. 3 gezeigten Vorrichtung,

Fig. 5 eine Aufsicht mehrerer Hohlleiter-Anordnungen mit einer rohrförmigen Durchlaufstrecke für ein zu erwärmendes Objekt,

Fig. 6 eine Vorderseitenansicht mehrerer Hohlleiter-Anordnungen etwa wie in Fig. 5 gezeigt,

Fig. 7 eine Seitenansicht eines ringförmigen Hohlleiters mit mehreren Einkoppelstellen für Mikrowellensender,

Fig. 8 eine Querschnittsdarstellung entsprechend der Schnittlinie VIII - VIII in Fig. 7,

Fig. 9 eine Aufsicht einer Vorrichtung für einen kontinuierlichen Durchlauf von zu erwärmenden Objekten,

Fig. 10 eine gegenüber Fig. 9 etwas detailliertere Darstellung im Bereich der Bestrahlungszone,

Fig. 11 eine Längsschnittdarstellung eines Führungsrohres im Bereich eines Einstrahlungsfensters,

Fig. 12 einen Aufnahmebehälter für zu erwärmende Objekte,

Fig. 13 eine Schnittdarstellung des in Fig. 12 gezeigten Aufnahmebehälters gemäß der Schnittlinie XIII - XIII in Fig. 12,

Fig. 14 eine gegenüber Fig. 9 und 10 abgewandelte Ausführungsform einer erfindungsgemäßen Vorrichtung und

Fig. 15 und 16 etwa Fig. 3 entsprechende Hohlleiter-Anordnungen, hier jedoch mit am Umfang angeordneten Mikrowellensendern.

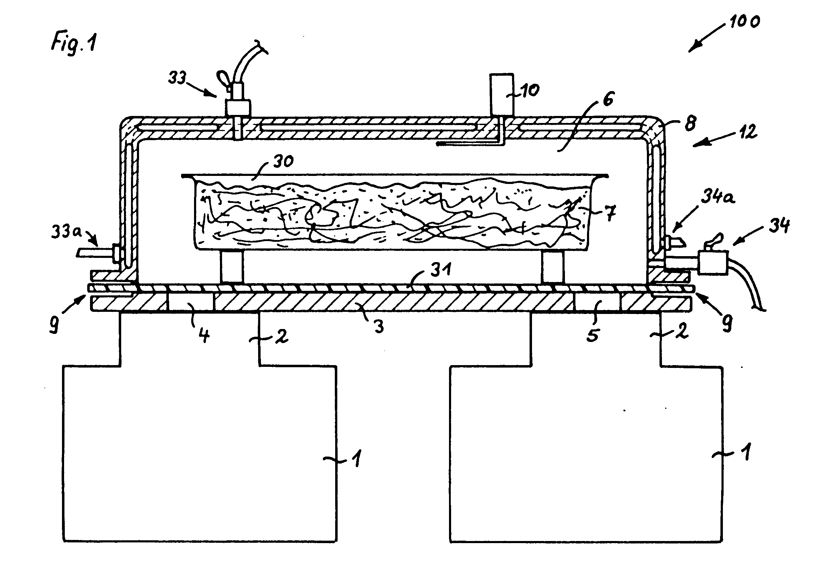

Eine Vorrichtung 100 (Fig. 1) dient zum Erwärmen und insbesondere Sterilisieren von luftdicht in einer Verpackung 30 befindlichen Objekten 7. Die Vorrichtung 100 weist dazu einen Arbeitsraum 6 auf, der durch eine metallische Bodenplane 3 sowie ein darauf luftdicht aufsetzbares, haubenartiges Gehäuseteil 8 umgrenzt ist. In der Bodenplatte 3 befinden sich als Fenster 4 ausgebildete Strahlungs-Eintrinsöffnungen, die etwa bei den Endbereichen der Längserstreckung des Arbeitsraumes 6 angeordnet sind. Bei diesen Fenstern sind Hohlrohrzuleitungen 2 zweier Mikrowellen-Sender 1 angeschlossen. Um zu verhindern, daß die Verpackung 30 der luftdicht verpackten Objekte beim Erwärmen durch den sich innerhalb der Verpackung erhöhenden Innendruck zerstört wird, wird unter äußerem Überdruck innerhalb des Arbeitsraumes 6 gearbeitet. Dazu wird zu Beginn der Behandlung für genügend Feuchtigkeit im Arbeitsraum 6 gesorgt. Eine äußere, gesonderte Druckerzeugung erübrigt sich dadurch. Ein genauer Dampfdruckausgleich ist dabei nicht erforderlich, da die Objekt-Verpackung selbst eine gewisse Druckdifferenz aushält. Zur Abdichtung des Arbeitsraumes 6 sind die Fenster durch eine strahlendurchlässige Abdeckung 31 luftdicht verschlossen. Die Abdeckung 31 ist insbesondere durch eine Teflonplatte gebildet, die bei guter Druckfestigkeit und Abdichtung eine dielektrische Schicht mit vernachlässigbaren Verlusten und kleiner Dielektrizitätskonstante bildet. Mit 9 sind noch sogenannte Hochfrequenzfallen bezeichnet, durch die eine Abstrahlung von Hochfreqenz im Dichtungs- bzw. Trennbereich vermieden wird. Durch die Anordnung der Einstrahlstellen 4,5 in den Endbereichen der Längserstreckung des Arbeitsraumes 6 und durch die Abmessungen des Arbeitsraumes, der wenig größer als das Objekt selbst ist, wird zur homogenen Erwärmung des Objektes 7 die Längsresonanz des Raumes benutzt mit passendem Reflektionsabstand zwischen Objekt und Wänden.

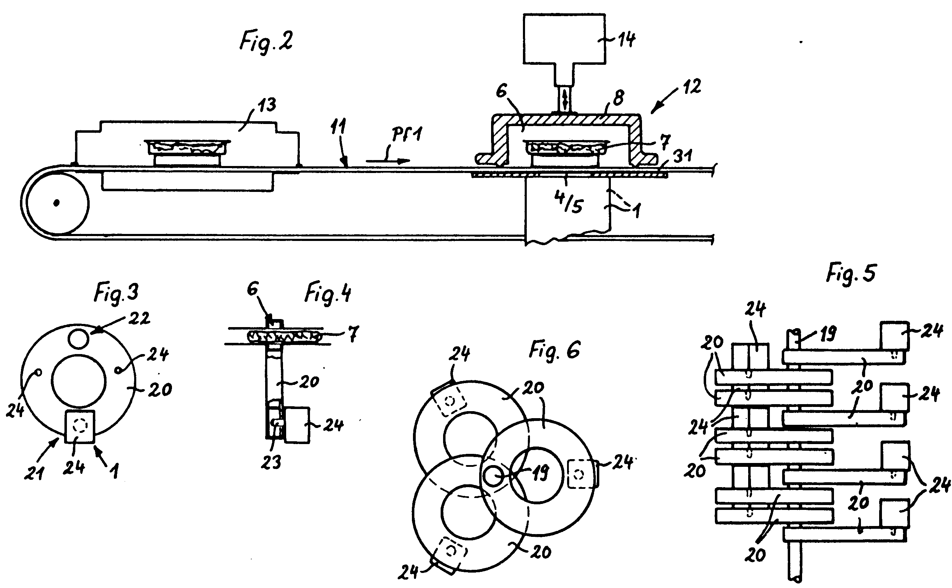

Das Gehäuseteil 8 ist von der Bodenplatte 3 abnehmbar zum Einsetzen und auch Entnehmen des zu erwärmenden Objektes 7. In Fig. 2 ist eine Andruckvorrichtung 14 angedeutet, mit der das Gehäuseteil 8 dicht auf die Bodenplatte 3 unter Zwischenlage der Abdeckung 31 aufgepreßt werden kann. Im Ausführungsbeispiel gemäß Fig. 2 ist die Abdeckung 31 durch ein Transportband 11 gebildet.

Nach dem Einsetzen des zu erwärmenden Objektes 7 in den Arbeitsraum 6 wird dieser druckdicht verschlossen. Bei Verwendung von zwei Hochfrequenzeinstrahlungen, im Ausführungsbeispiel gemäß Fig. 1 mit-

EP 0 136 453 B2

tels zweier Mikrowellensender 1 etwa gleicher Leistung und Frequenz, ergibt sich in erwünschter Weise eine etwa gleichmäßige Energiedichte über die Erstreckung des Objektes 7. Dies ergibt sich dadurch, weil die Energiedichte wegen der Absorption längs des Objektes von einem Eintrittsfenster z. B. 4 in Richtung zum anderen Fenster 5 abnimmt und zwar bei entsprechender Dämpfung wie $\cos^2 \frac{\pi \cdot 1}{4 \cdot 1_0}$.

Daraus ist erkennbar, daß der Abfall der Energiedichte nahezu linear ist. Beide Sender 1 zusammen erzeugen somit einen fast konstanten Mittelwert längs des Objektes 7. $1_0$ ist der mittlere Fensterabstand und 1 die Längserstreckung des Objektes 7. Ortliche Überhöhungen der Energiedichte können durch speziell geformte Blenden in an sich bekannter Weise verhindert werden.

Damit die angepaßten Sender 1 sich bei zu dichter Kohärenz nicht gegenseitig stören, werden sie im Wechseltakt betrieben mit im Mittel voller Leistung. Dies wird bei Gleichspannungsbetrieb durch wechselweises Austasten und bei Wechselspannungsbetrieb durch eine Phasendifferenz von 180° am Trafoeingang od. dgl. erreicht.

Üblicherweise sind die Verpackungen 30 vor der Erwärmung bereits vakuumdicht verschweißt. Unter Umständen kann aber auch die Schweißung im geschlossenen Gehäuse erfolgen, indem z. B. durch flexible Wellrohre Spannung und Anpreßdruck zugeführt wird.

Zu Beginn der Behandlung muß für genügend Feuchtigkeit im Arbeitsraum 6 gesorgt werden wegen des notwendigen
Dampfdruckausgleiches.

In Fig. 1 ist gut erkennbar, daß das haubenartige Gehäuseteil 8 Aufnahmehöhlungen 32 für Kühlmittel aufweist. Solche Höhlungen könnten gegebenenfalls auch im Bereich der Bodenplatte 3 vorgesehen sein. Im wesentlichen erfolgt jedoch das Abkühlen des Objektes 7 nach dem Erhitzen auf die vorgesehene Temperatur durch direktes Einspritzen von Kühlmedium in den Arbeitsraum 6. Zur Zuleitung und Ableitung des Kühlmediums ist ein entsprechender Eintritt 33 und ein Austritt 34, gegebenenfalls mit Rückschlagventilen und Absperrhähnen vorgesehen. Auch die Aufnahmehöhlung(en) 32 des Gehäuseteiles 8 weisen entsprechende Einund Austritte 33 a, 34 a auf. Das Kühlmedium wird unter einem mindestens dem Arbeitsraumdruck entsprechenden Druck eingepreßt, gegebenenfalls mehrfach oder im kontinuierlichen Durchlauf.

Gemäß Fig. 1 ist die Vorrichtung als Einsatzofen ausgebildet, während Fig. 2 einen Durchlaufofen 12 zeigt. In Fig. 2 ist der Arbeitsraum 6 bzw. das ihn umgebende Gehäuse in einer gegenüber Fig. 1 um 90° verdrehten Lage dargestellt. Die Vorrichtung gemäß Fig. 2 arbeitet im Takt, das bedeutet, daß das haubenartige Gehäuseteil 8 nach einer Behandlung - Erwärmen und Abkühlen - angehoben wird, so daß das Objekt 7 entnommen werden kann. Im Ausführungsbeispiel wird dazu das Transportband 11 gemäß dem Pfeil Pf 1 so weit weiterbewegt, bis das nächste Objekt 7 im Bereich des Arbeitsraumes 6 positioniert ist. Mittels der Andruckvorrichtung 14 wird dann die Haube 8 geschlossen und dicht an die Bodenplatte 3 angedrückt, wobei das Transportband 11 für eine gute Abdichtung sorgt und hierbei die Funktion der Abdeckung 31 gemäß Fig. 1 übernimmt.

Mit 13 ist noch ein Vorwärmraum bezeichnet, in dem das Objekt vorgewärmt wird, um die Verweilzeit in dem Ofen 12 abzukürzen.

Wie bereits vorerwähnt, sind bei der Anordnung gemäß Fig. 1 und 2 die Strahlungseintrittsöffnungen 4, 5 derart angeordnet, daß sich die beiden Hochfrequenzfelder zumindest im Zeitmittel so im Objekt 7 unter Berücksichtigung von dessen Absorption überlagern, daß eine vorgebbare Temperaturverteilung in gewünschtem Sinne auftritt.

Zur gegebenenfalls automatischen Steuerung des Arbeitsablaufes mit Zu- und Abführen des Objektes und Öffnen und Schließen des Ofens kann in den Arbeitsraum 6 ein Temperaturmesser 10 (Fig. 1) ragen. Gegebenenfalls kann anstatt oder in Kombination mit einem solchen Temperaturmesser 10 auch ein Druckmesser vorgesehen sein. Durch Messung dieser Größen läßt sich der Arbeitsablauf automatisch steuern.

Die vorerwähnte Kühlung des Objektes 7 durch direktes Einspritzen und/oder Durchführen von Kühlmedium durch den Arbeitsraum 6 kann noch durch in den Aufnahmehöhlungen 32 des Gehäuseteiles 8 befindliches bzw. durchströmendes Kühlmedium verbessert werden. Die direkte Einspritzung von Kühlmedium auf das Objekt ist deshalb möglich, weil sich dieses in der Regel in einer gas- und wasserdichten Kunststoff-Umhüllung befindet. Der Kühlvorgang kann gegebenenfalls mehrfach wiederholt werden unter Ausnützung einer Art Kreisprozeß, wobei die Wärmekapazität sowie die Verdampfungs- und Verdunstungswärme des zugeführten Kühlmediums oder eines passenden Gemisches wirksam werden. Das Objekt liegt dann mindestens im Zeitmittel in einem Dauerkühlstrom. Bei Abschirmung und Wärmeaustausch bekannter Art können die Verluste sehr gering gehalten werden. Dadurch wird erreicht, daß die Abkühlzeit der Aufwärmzeit genau vergleichbar gehalten werden kann.

Das Objekt 7 ist entsprechend der Hochfrequenzverteilung des Summenfeldes im Bereich eines Maximums positioniert. Dabei ist das Summenfeld bei gleicher Frequenz und Phase eine Aufeinanderfolge von gleich hohen Maxima im Abstand von Lambda der Hohlraumwelle. Dies gilt sowohl bei Verwendung eines einzigen Senders, wie z. B. in Fig. 3 und 4 gezeigt, als auch bei mehreren Sendern, die durch Steuerung auf fester Phase und gleicher Frequenz und vorzugsweise auch gleicher Amplitude gehalten werden. Wenn das Objekt 7 an die Stelle eines Maximums eingesetzt wird, so kann durch Beeinflussung der Absorption des Objektes, d. h. durch Objektgröße bzw. dessen elektrische Eigenschaften, folgendes erreicht werden:

Bei Absorption verringert sich die ursprüngliche Amplitude in der Mine des Objektes und entsprechend erhöht sich die Amplitude in den benachbarten Minima. Bei entsprechender Wahl der vorgenannten Objekteigenschaften kann auf diese Weise erreicht werden, daß die Mine des Objektes größere, kleinere oder auch gleiche Erwärmungen wie der Randbereich oder die Randbereiche des Objektes erhält. Das zu erwärmende Objekt kann sich somit auch über mehr als eine Halbwelle über die benachbarten ursprünglichen Minima hinaus erstrecken.

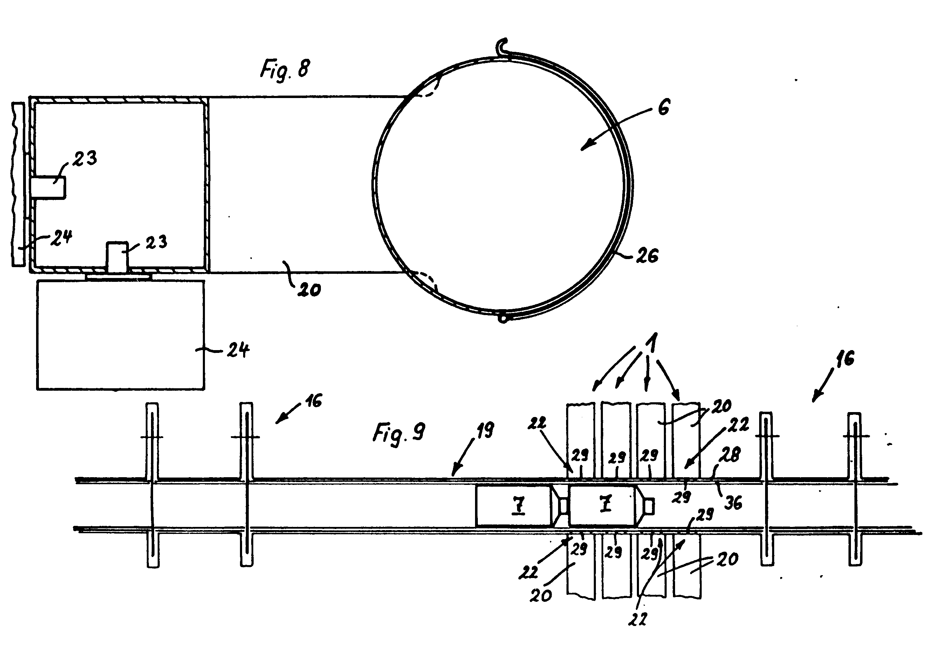

Für den Fall, daß mehrere Sender verwendet werden, die etwa gleiche Frequenz haben und vorzugsweise auch näherungsweise gleiche Amplitude, wiederholt sich der vorbeschriebene Vorgang wie bei einem Sender, wobei sich die Maxima addieren oder ganz oder teilweise subtrahieren je nach Phasenlage in hochfrequentem Wechsel. Dies gilt bei gleicher Polarisation, wobei eine geometrische Addition vorhanden ist. Bei senkrecht zueinander stehenden Polarisationen (vgl. Fig. 8) addieren sich im Zeitminel nur die Energien. Dies bedeutet eine sogenannte skalare Addition.

Die anhand der Figuren 1 und 2 beispielsweise beschriebenen Vorrichtungen 10 eignen sich im wesentlichen nur für Einsatzöfen oder für Durchlauföfen mit kleinen Durchlaufmengen. In pharmazeutischen Betrieben fallen jedoch häufig sehr große Durchlaufmengen, z. B. mehrere 1.000 Liter pro Stunde zu erwärmender Objekte an.

Beispielsweise in den Figuren 3 bis 5 sind einzeln oder in Mehrfachanordnung Vorrichtungen gezeigt, die einen ringförmigen Hohlleiter 20 mit symmetrisch zueinander liegenden Ein- und Auskoppelstellen 21, 22 auf. Der druckdichte Arbeitsraum 6 ist dabei durch einen Teil dieses Hohlleiters 20 bei der Auskoppelstelle 22 gebildet. Bei der Einkoppelstelle 21 ist der Mikrowellensender 1 angeordnet. Er besteht vorzugsweise aus einem Magnetron, das mit seinem Dipol 23 seitlich in axialer Richtung in den ringförmigen Hohlleiter 20 bei der Einkoppelstelle 21 eingreift. Mit 24 sind Stellen bezeichnet, an denen gegebenenfalls Elemente zur Anpassungsverbesserung vorgesehen sein können. Diese dienen zur Beeinflussung der Feldverteilung im Arbeitsraum und bilden in ihn eingekoppelte, verstellbare Blindleitwerte. Der etwa ringförmige Hohlleiter 20 hat bei den Ausführungsformen gemäß Fig. 3 bis 5 einen rechteckigen Querschnitt mit in radialer Richtung längeren Seiten als in axialer Richtung. Die Feldrichtung ist somit parallel zur Erstreckung bzw. zu einer gegebenenfalls vorgesehenen Transportrichtung des Objektes.

Fig. 4 zeigt die Vorrichtung gemäß Fig. 3 im Querschnitt. Hierbei ist auch zu erkennen, daß ein zu erwärmendes Objekt 7 in einem Rohr durch den Arbeitsraum 6 geführt wird. Die sich an den Arbeitsraum 6 seitlich anschließenden metallischen Hohlrohre weisen einen unterkritischen Durchmesser auf, so daß eine seitliche Hochfrequenzabstrahlung vermieden wird. Dies ist insbesondere bei einer Anordnung von Hohlleitern, wie in Fig. 5 und 6 gezeigt. vorteilhaft, da hierdurch mehrere von solchen ringförmigen Hohlleitern sehr nahe beieinander angeordnet werden können. Die Anordnung gemäß Fig. 5 und 6 aus mehreren Hohlleiteranordnungen, wie in Fig. 3 und 4 gezeigt, ist dann vorteilhaft, wenn größere Objektmengen anfallen. Der Arbeitsraum 6 erstreckt sich dann über den Bereich mehrerer solcher Hohlleiter, und ist durch ein Rohr 19 umgrenzt. Um trotz der seitlich angeschlossenen Magnetrons 24 die Hohlleiter in axialer Richtung dicht beieinander anordnen zu können, sind die einzelnen auf einen Arbeitsraum 6 arbeitenden Hohlleiter 20 gegeneinander drehversetzt, wie dies anhand von drei Hohlleitern in Fig. 6 gezeigt ist. Bei größeren Objektdurchmessern werden anstatt der unterkritischen Rohre an sich bekannte ringförmige HF-Fallen verwendet.

Erwähnt sei, daß erfindungsgemäß nicht nur homogene Erwärmungen von Objekten, sondern auch gezielte Erwärmung bevorzugt der Mitte oder aber der Seitenbereiche des Objektes möglich sind. Eine inhomogene Leistungsverteilung über den Querschnitt des Objektes ist beispielsweise bei der Sterilisierung von Milch erwünscht, die in einem Isolierrohr strömt, wobei der Rohrwand benachbarte Teile langsamer strömen wegen der Reibung an der Wand. Bei einem homogenen Feld würde der im Rohrwandbereich fließende Teil der Milch gegenüber dem mittleren Bereich zu stark erhitzt werden. Durch eine gezielte Verteilung des Feldes kann trotz dieser Strömungsunterschiede eine über den Querschnitt gleichmäßige Erwärmung erzielt werden. Ein anderes Beispiel sind Lebensmittel wie z. B. Brötchen mit eingelegten Teilen hohen Wassergehaltes, wie Feisch od. dgl., die sich in einer Verpackung befinden.

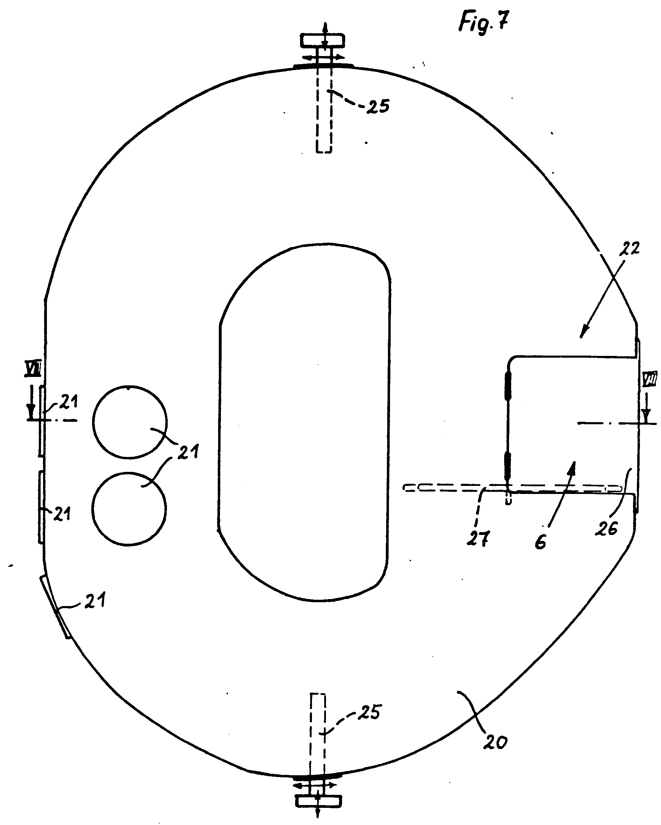

Fig. 7 zeigt eine Hohlleiteranordnung, bei der der Hohlleiter 20 einen quadratischen Querschnitt hat, wie dies in Fig. 8 erkennbar ist. Dadurch besteht die Möglichkeit, gleichzeitig mehrere Polarisationen ohne gegenseitige Störung einzukoppeln. Prinzipiell könnte auch ein runder Querschnitt verwendet werden. Bei diesem Hohlleiter sind mehrere Einkoppelstellen 21 erkennbar, an denen Mikrowellensender 1, insbesondere Magnetrons angesetzt werden können. Bei Verwendung mehrerer Sender sind die Koppelstellen vom Objekt bzw.

vom Arbeitsraum 6 aus gesehen um ganzzahlige Lambdahalbe verschoben. Sender gleicher Polarisationsrichtung werden dabei zu ungleichen Zeiten betrieben. Mit dieser Anordnung können mehrere Sender mit addierendem Leistungsbetrag betrieben werden.

Bei der Ausführungsform gemäß Fig. 7 und 8 ist der Resonanzraum ein Thoroid, in dem zwei Wellenzüge gegensinnig laufen können. Der Arbeitsraum 6 ist in seiner Hauptausdehnung zylindrisch oder quadratisch begrenzt, so daß er in mehreren definierten Polarisationsrichtungen schwingen kann. Falls keine Sondereffekte erwünscht sind, ist sein Durchmesser oder seine Kantenlänge so bemessen, daß keine Knoten in der Querschnittsebene auftreten können, also in der Größenordnung der Wellenlänge. Der quadratische Querschnitt erleichtert die Trennung der Polarisation und der Einkopplung. Das Hauptprofil des Hohlleiters 20 ist ein Kreiseck oder ein Vieleck mit angepaßten Eckknicken. Die Einkoppelstellen 21 liegen jeweils um eine Viertelraumwellenlänge verschoben entweder auf der Umfangsseite oder rechtwinklig dazu auf der Seitenfläche.

Die Einkoppelstellen 21 sind teils bereits polarisationsmäßig total entkoppelt, die kapazitive Kopplung spielt hier keine merkbare Rolle, teilweise entkoppelt dadurch, daß bei den großen Innenausdehnungen des Hohlraums das Feld sich erst langsam in den gesamten Querschnitt ausbreitet und zwar nur von symmetrisch zum Umlauf liegenden Stellen symmetrisch, von den asymmetrischen Stellen pendelnd von der Innenseite zur Außenseite und zurück. Auch dieser Effekt wird zur Homogenisierung benutzt. Für alle Einkoppelpunkte gilt, daß der in sich geschlossene Hohlleiter einen Resonanzraum darstellt, in dem zwei Wellenzüge in entgegengesetzter Richtung von den Einkoppelstellen 21 laufen können und sich zu Resonanzbildern überlagern. Symmetriepunkt dazu ist jeweils der Einkoppelpunkt. Die Resonanzhöhe und die Phase relativ zur Schwingungsphase des Sendedipols z. B. wird eingestellt durch die elektrische Länge des Hohlleiters. Dazu können Einstellelemente 25 vorgesehen sein, die Blindleitwerte darstellen und die gemäß den Doppelpfeilen in Fig. 7 verstellt werden können.

Die Lambda/4-Versetzung zweier Ankoppelpunkte gleicher Polarisation hat den wichtigen Effekt an der Objektstelle zur Folge, daß dort jeweils zwei Ebenen mit maximaler Feldamplitude aufeinanderfolgen. Da die Sender nicht kohärent schwingen, wirkt nur das mittlere Amplitudenquadrat der Felder auf den Objektraum. Das Amplitudenquadrat des cos ist aber bekanntlich fast genau linear von 0 bis 1; die Summe also im Zeitminel genau 1. D. h., daß die beiden Felder trotz totaler Resonanz an der Stelle des Objektes homogene Erwärmung erzeugen, unabhängig von der beiderseitigen Polarisation. Um Störungen bei mehreren Sendern bei gleicher Polarisation und Kohärenz oder Nahezukohärenz gegenseitig zu vermeiden, werden die Sender im Gegentakt oder Wechseltakt betrieben. Bei mehr als zwei Sendern kann auch eine Impulssteuerung für einen Betrieb der Sender nacheinander vorgesehen sein.

In Fig. 7 ist der Arbeitsraum 6 durch eine etwa halbkreisförmige Tür 26 verschließbar. Mit 27 ist strichliniert ein Drehteller angedeutet, auf dem das zu erwärmende Objekt 7 aufgelegt werden kann. Durch diesen Drehteller läßt sich entsprechend eine Homogenisierung in der Ebene erreichen. Fig. 8 läßt gut erkennen, daß die Sendedipole 23 üblicher Leistungsmagnetrons 24 bei dem quadratischen Querschnitt des Hohlleiters 20 rechtwinklig zueinander angeordnet sind.

Die vorbeschriebenen Maßnahmen einzeln oder insbesondere in Kombination machen es möglich, auf kleinstem Raum sehr große Leistungen zu addieren ohne gegenseitige Störung. Damit läßt sich z. B. die Voraussetzung für eine moderne Lebensmittel-Automatentechnik erfüllen, wobei aus einem tiefgekühlten Reservoir Essensportionen auf Knopfdruck innerhalb von z. B. 2 bis 3 Sekunden eßbereit ausgeliefert werden können.

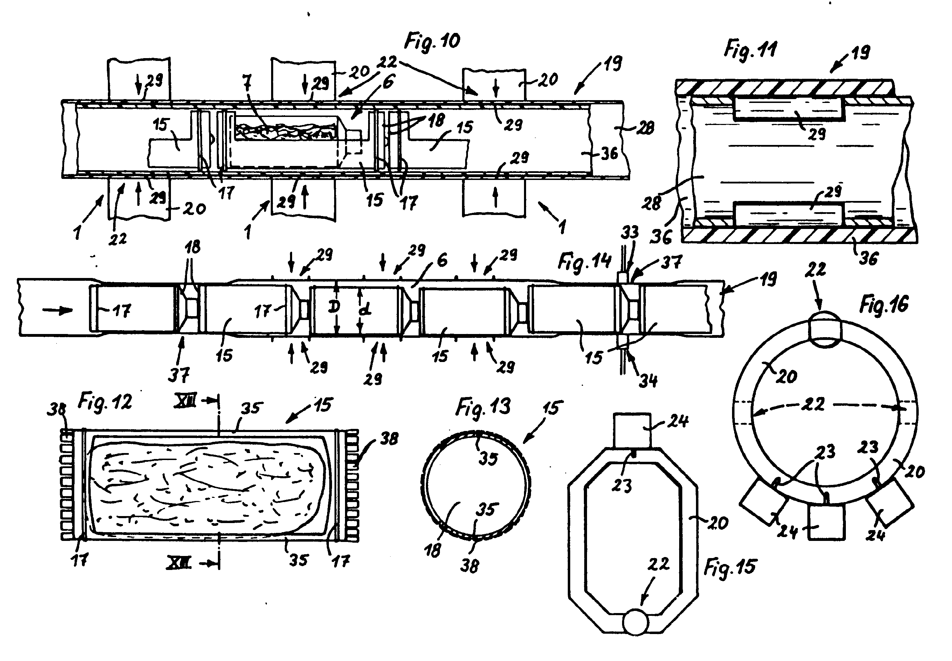

Die Figuren 15 und 16 zeigen Hohlleiteranordnungen, bei denen der etwa ringförmige Hohlleiter 20 einen rechteckigen Querschnitt mit in radialer Richtung kürzeren Seiten als in axialer Richtung hat. Die Magnetrons 24 sind hier entsprechend dieser Geometrie am Außenumfang des Hohlleiters 20 im Einkoppelstellenbereich 21 angeordnet. Die Auskoppelstelle befindet sich üblicherweise auf der gegenüberliegenden Seite, kann jedoch auch in einer etwa 90° zur Einkoppelstelle 21 befindlichen Lage vorgesehen sein.

Die Figuren 9 und 10 zeigen eine Vorrichtung, bei der der Arbeitsraum 6 im wesentlichen durch ein Metallrohr 28 mit strahlendurchlässigen, aber druckdicht verschlossenen Fenstereinschnitten 29 für die Mikrowellenstrahlung gebildet ist. Zur Abdichtung der Fenstereinschnitte 29 ist in Fig. 10 innenseitig und in Fig. 11 außenseitig ein am Metallrohr 28 anliegendes Kunststoffrohr vorzugsweise aus PTFE (Teflon) vorgesehen. Durch das Rohr werden die zu erwärmenden Objekte 7 lose, in ihrer Originalverpackung oder in Aufnahmebehältern 15 hindurchtransportiert. Bei der Ausführungsform gemäß Fig. 9 befindet sich am Anfang und am Ende des Rohres jeweils eine Druckschleuse 16. Die Auskoppelstellen 22 der Hohlleiter 20 befinden sich bei den Fenstereinschnitten 29. Vor oder in der Austrittsschleuse ist wenigstens eine hier nicht dargestellte Kühlkammer vorgesehen. Fig. 10 zeigt eine Ausführungsform, bei der zur Aufnahme und zum Durchfördern von Objekten durch den rohrförmigen Arbeitsraum 6 etwa kolbenartige Behälter 15 vorgesehen sind. Diese sind gegebenenfalls miteinander mechanisch koppelbar. Sie sind mit Führungsringen 17 versehen, die gleichzeitig an der Rohrinnenwand anliegende Dichtringe bilden.

Die Behälter 15 sind stirnseitig durch Metallwände 18 (vgl. Fig. 13) abgeschlossen. Eine bevorzugte Ausführungsform eines Aufnahmebehälters 15 zeigt Fig. 12 und 13. Hierbei ist zu erkennen, daß die Behälter ausgehend von ihren stirnseitigen Metallwänden 18 diametral gegenüberliegende Längsstege 35 aufweisen. Durch diese Längsstege, die vergleichsweise schmal ausgebildet sein können, kann gut die bei dem auftretenden Druck entstehenden Zugkräfte aufgefangen werden. Der Betriebsdruck kann beispielsweise 2 bis 3 bar betragen. Die Aufnahmebehälter 15 sind insbesondere auch durch ihre Ausbildung mit den schmalen Längsstegen 35 gut zur Aufnahme von Objekten 7 geeignet. Innerhalb des Rohres werden dabei die Objekte durch das Rohr selbst am Herausfallen gehindert.

Vor und nach den Druckschleusen 16 (Fig. 9) weist das Führungsrohr entsprechende Offnungen oberseitig bzw. unterseitig zum Beladen bzw. Entladen den Behälter 15 auf. Die Druckschleusen 16 sind insbesondere mit Drehschiebern versehen. Erwähnt sei noch, daß beim Eintritt der Objekte in das Hohr hinter der Eingangsschleuse direkt eine Druckbelastung von außen her auftritt. Dies schadet den verpackten Objekten jedoch nicht. Dagegen muß nach der Erwärmung vor dem Passieren der Ausgangsschleuse dafür Sorge getragen werden, daß der innerhalb der Verpackung herrschende Überdruck durch Kühlung, wie vorerwähnt, abgebaut wird.

Eine Ausführungsvariante gegenüber Fig. 10 zeigt Fig. 14. Hier ist vorgesehen, daß das Führungsrohr 28 oder 36 im Bereich des Arbeitsraumes 6 einen geringfügig gröberen lichten Durchmesser D aufweist als der Außendurchmesser der Behälter 15 od. dgl. entspricht. An diesen Arbeitsraum 6 schließen beidseitig Führungsrohrabschnitte 37 mit auf die Behälter im Sinne einer Abdichtung abgestimmten, gegenüber dem Arbeitsraum geringeren lichten Querschnitt an. Dadurch hat man den Vorteil, daß nur die jeweils in der Dichtzone auftretende Durchtrittsreibung beim Durchfördern der Aufnahmebehälter 15 mit den darin befindlichen Objekten 7 überwunden werden muß. Insgesamt ergibt sich somit auch bei einer Vielzahl von hintereinander angereihten Behältnissen ein wesentlich geringerer Durchtrittswiderstand. Innerhalb des etwas im Durchmesser erweiterten Bereiches ist der Innendruck gleich, so daß die innerhalb dieses Bereiches befindlichen Behälter mit erhöhtem Druck beaufschlagt sind.

In Fig. 11 ist noch gezeigt, daß zur Reibungsverringerung zweckmäßigerweise das Metallrohr 28 zur Führung der Aufnahmebehälter 15 od.dgl. innenliegend und das Kunststoffrohr 36 zum druckdichten Verschließen der Fensteinschnitte 29 außenseitig am Metallrohr 28 anliegend angeordnet sein kann. Dadurch ergibt sich eine Reibungspaarung zwischen den Dichtungsringen 17 der Aufnahmebehälter 15 und dem Metallrohr 28, durch die eine wesentlich geringere Reibung vorhanden ist. Dadurch kann ebenfalls der Durchförderwiderstand verringert werden.

Zu den Behältnissen gemäß Fig. 12 und 13 sei noch bemerkt, daß diese Aufnahmebehälter 15 zweckmäßigerweise aus Metall bestehen. Dadurch ist, insbesondere auch durch die metallischen Stirnwände 18 eine gute Hochfrequenzabschirmung gegeben, durch die eine Abstrahlung nach außen hin verhindert wird. Gegebenenfalls könnten an den Enden der Behältnisse noch in einem Federkranz angeordnete Blechlamellen 38 vorgesehen sein, durch die eine Abschirmung nach außen in axialer Richtung noch verbessert ist.

Anstatt einzelner Behälter 15 zur Aufnahme von zu erwärmenden Objekten 7 könnte beispielsweise auch ein biegsames Wellrohr aus Metall oder Kunststoff verwendet werden, daß in entsprechenden Abständen Einschnitte für die Einstrahlung und zum Entnehmen und Füllen der Objekte 7 aufweist. In entsprechenden Abständen müssten dann an diesem Rohr Dichtungen vorgesehen sein. Durch diese Ausführungsform würde sich unter Umständen eine einfachere Herstellung ergeben als bei einer Vielzahl von Einzelbehältnissen.

Bei den Anordnungen gemäß Fig. 9, 10 und 14 sind die Behälter 15 zu einer Kette zusammengefügt und über flexible Kupplungen miteinander verbunden. Zum Durchfördern dieser Behälter-Kette ist zweckmäßigerweise eine hier nicht dargestellte Transportvorrichtung mit vorzugsweise symmetrisch liegenden Zahnrädern vorgesehen, die in den Außenmantel der Behälter eingreifen kann unter Überbrückung der Führungsringe und dergleichen. Die gesamte Transportvorrichtung mit dem Führungsrohr für die Behälter kann sich außerhalb des Arbeitsraumes und auch hinter einer gegebenenfalls vorgesehenen Kühlvorrichtung zum Ent- und Beladen fortsetzen und dann in einem geschlossenen Kreislauf auch wieder an den Anfang des Durchlaufes zurückführen.

Zu den Ausführungsformen gemäß Fig. 15 und 16 sei noch bernerkt, daß bei dieser Anordnung von Magnetrons 24 am Außenumfang der Hohlleiter 20 insbesondere auch vorteilhaft ist, daß bei einer Anordnung von mehreren Hohlleitern nebeneinander, wie in Fig. 5 gezeigt, günstigere Platzverhältnisse vorhanden sind. Gegenbenenfalls können dadurch auch die Hohlleiter dichter aneinander angeordnet werden. Dies ist vorteilhaft für Objekte, die zur Erwärmung ein etwas längeres, homogenes Feld benötigen. In Fig. 16 ist strichliniert noch angedeutet, daß außer dem Arbeitsraum 6 gegenüberliegend zur Einkoppelstelle 21 mit axialer Durchlaufrichtung auch im Zwischenbereich entsprechende Arbeitsraum-Öffnungen für einen radialen Durchlauf gegebenenfalls auf gegenüberliegenden Seiten des Hohlleiters vorgesehen sein können.

Bei einer in den Figuren nicht gezeigten Ausführungsform könnte der Hohlleiter auch durch den Differenzraum zweier konzentrischer Kugeln mit unterschiedlichen Radien gebildet sein, wobei Ein. und Auskoppelstellen an zwei gegenüberliegenden Polen angeordnet sind. Dies würde eine besonders gute Konzentration ergeben.

Erwähnt sei noch, daß bei Hohlleitern mit benachbart angeordneten Magnetrons zwar eine gewisse räumliche Kopplung auch im kalten Zustand besteht, die bereits zu einer bemerkbaren Verlust-Energieaufnahme führen würde. Diese Kopplung wird aber auf vernachlässigbare Werte verringert, da die zugehörige Kathode auch bei abgeschalteter Anodenspannung durchgeheizt wird, wobei die dabei auftretende Elektronenemission den Magnetronresonanzkreis genügend dämpft.

Zusammengefaßt ergibt sich folgendes:

Es handelt sich beim Erfindungsgegenstand bzw. beim erfindungsgemäßen Verfahren um die Erwärmung von Objekten im Mikrowellenfeld insbesondere auf höhere Temperaturen, z. B. 130° C, wobei wegen des meist vorliegenden Wassergehaltes im Objekt mehrere bar Uberdruck entstehen können.

Die Objekte, meist Pharmazeutika oder Lebensmittel zur Sterilisierung, sind in eine vacuumdichte Verpakkung eingeschlossen, die mikrowellendurchlässig ist, aber dem erhöhten Innendruck meist nicht standhält. Der notwendige äußere Gegendruck wird im vorliegenden Fall durch mitverdunstende Feuchtigkeit geliefert.

Die druckdichten, im wesentlichen metallisch geschlossenen Arbeitsräume stellen wegen ihrer mechanisch notwendigerweise geringen Abmessungen besondere Aufgaben für die Einstrahlungsformen der Hochfrequenz dar, um die erstrebte, z. B. homogene Erwärmung auch bei größeren Objekten zu erreichen. Das gelingt mittels Interferenzen der Strahlungsfelder aus mindestens zwei Strahlungsquellen, wobei eine Konzentration im allgemeinen auf die Objektmitte erzielt wird, die unter Berücksichtigung der Absorption auf dem Wege dorthin die gewünschte Temperaturverteilung ermöglicht. Da der Sterilisierungserfolg nicht nur von der erreichten Temperatur und der Verweilzeit in dieser, sondern auch in hohem Maße von der Geschwindigkeit des Temperatur-Anstieges und -Abfalls abhängt, also dem Temperaturgradienten über der Zeit, können notwendige Endtemperatur und Verweilzeit stark durch hohen Gradienten verringert werden. Dies ist ein wesentlicher, durch die Erfindung erzielter Fortschritt. Daher beschäftigt sich die Anmeldung mit der Konzentration mehrerer Sender auf ein Objekt unter Verwendung der Trennung durch verschiedene Polarisation und durch verschiedene Zeitbereiche der Sendeimpulse. Als Ausführungsbeispiele sind Einsatzöfen mit einem Senderaggregat bis zu Durchlauföfen mit beliebig vielen Aggregaten und entsprechender Schnellkühlung angegeben.

Alle in der Beschreibung, den Ansprüchen und der Zeichnung dargestellten Merkmale können sowohl einzeln als auch in beliebiger Form miteinander erfindungswesentlich sein.

## Patentansprüche

1.  Verfahren zum Erwärmen von luftdicht verpackten Objekten mittels Mikrowellen unter Einfluß von äußerem Überdruck mittels wenigstens zweier Hochfrequenzeinstrahlungen,
    dadurch gekennzeichnet,
    daß zu einer gezielten Erwärmungsverteilung innerhalb des oder der Objekte zwei Wellenzüge gegensinniger Richtungen, die von in Längsrichtung des Arbeitsraumes verschiedenen Enden ausgehen und sich im Objekt überlagern und ein Summenfeld bilden, verwendet werden, wobei das Objekt im Bereich eines Maximums einer stehenden Hochfrequenzwelle des Summenfeldes positioniert wird und daß zur Erzeugung dieser beiden Wellenzüge die Energie eines Senders in zwei Richtungen aufgeteilt wird.

2.  Verfahren zum Erwärmen von luftdicht verpackten Objekten mittels Mikrowellen unter Einfluß von äußerem Überdruck mittels wenigsten zweier Hochfrequenzeinstrahlungen,
    dadurch gekennzeichnet,
    daß zu einer gezielten Erwärmungsverteilung innerhalb des oder der Objekte zwei Wellenzüge gegensinniger Richtungen, die von in Längsrichtung des Arbeitsraumes verschiedenen Enden ausgehen und sich im Objekt überlagern und ein Summenfeld bilden, verwendet werden, wobei das Objekt im Bereich eines Maximums einer stehenden Hochfrequenzwelle des Summenfeldes positioniert wird und daß zwei Sender näherungsweise gleicher frequenz und Amplitude, die bei senkrecht aufeinander stehender Polarisation im Gleichtakt arbeiten, die beiden Wellenzüge abgeben.

3.  Verfahren nach Anspruch 2 dadurch gekennzeichnet, daß zwei Sender etwa gleicher Frequenz und Amplitude und gleicher Polarisation im niederfrequenten Wechseltakt einstrahlen.

4.  Verfahren nach Anspruch 2 dadurch gekennzeichnet, daß bei zwei oder mehr Sendern diese nacheinander mittels einer Impulssteuerung betrieben werden.

5. Verfahren nach einem der Ansprüche 1 bis 4 dadurch gekennzeichnet, daß die Hochfrequenzeinstrahlungen u. dgl. über Druck und/oder Temperaturmessung gesteuert werden.

6. Verfahren nach einem der Ansprüche 1 bis 5 dadurch gekennzeichnet, daß die zu erwärmenden Objekte intermittierend an der Mikrowellen.Einstrahlstelle entlanggeführt werden und daß der Impulstakt vorzugsweise durch Druck und/oder Temperatur innerhalb des Arbeitsraumes gesteuert wird.

7. Verfahren nach einem der Ansprüche 1 bis 5, dadurch gekennzeichnet, daß die zu erwärmenden Objekte kontinuierlich an der Mikrowellen-Einstrahlstelle entlanggeführt werden und daß die Einstrahlung im Übergangsbereich zwischen benachbarten Objekten vorzugsweise jeweils ausgeschaltet wird.

8. Verfahren nach einem der Ansprüche 1 bis 7, dadurch gekennzeichnet, daß die Objekte nach dem Erwärmen durch Zuführen eines Kühlmediums mindestens mit dem das Objekt umgebenden Druck, vorzugsweise im wesentlichen unmittelbar gekühlt werden.

9. Vorrichtung zum Erwärmen von Objekten mittels Mikrowellen unter Einfluß von äußerem Uberdruck, wobei die Vorrichtung wenigstens einen in einem insbesondere druckdichten, metallisch begrenzten Arbeitsraum einstrahlenden Mikrowellensender, insbesondere ein Magnetron und mindestens zwei Strahlungs-Eintritte aufweist, zur Durchführung des Verfahrens nach einem der Ansprüche 1 bis 8, durch gekennzeichnet, daß die Strahlungs-Eintritte derart angeordnet sind, daß sich die beiden Hochfrequenzfelder im Objekt (7) unter Berücksichtigung von desen Absorption zur gezielten Erwärmung so überlagern, daß eine vorgebbare Erwärmungsverteilung auftritt, und daß der Arbeitsraum (6) derart bemessen ist, daß er sich in Längsresonanz und die Einstrahlöffnungen sich im Bereich der Enden der Längserstreckung befinden.

10. Vorrichtung nach Anspruch 9, dadurch gegennzeichnet, daß der Arbeitsraum (6) wenigstens einen Eintritt (33) und einen Austritt (34) für Kühlmedium aufweist.

11. Vorrichtung nach einem der Ansprüche 9 oder 10 dadürch gekennzeichnet, daß der Arbeitsraum (6) durch eine metallische Bodenplatte (3) sowie ein darauf luftdicht aufsetzbares, haubenartiges Gehäuseteil (8) aus Metall umgrenzt ist, daß die Strahlungs-Eintrittsöffnungen durch Eintrittsfenster (4, 5) in der Bodenplatte gebildet sind, die durch eine strahlendurchlässige Abdeckung (31 ) luftdicht verschlossen sind und daß sich die Fenster bei den Endbereichen der Längserstreckung des Arbeitsraumes befinden.

12. Vorrichtung nach einem der Ansprüche 9 oder 10 , dadurch gekennzeichnet, daß wenigstens ein ringförmiger Hohlleiter mit symmetrisch zueinander liegenden Ein- und Auskoppelstellen vorgesehen ist, und daß der druckdichte Arbeitsraum durch einen Teil dieses Hohlleiters bei der Auskoppelstelle gebildet ist.

13. Vorrichtung nach einem der Ansprüche 9 bis 12 dadurch gekennzeichnet, daß die Feldrichtung parallel zur Erstreckung bzw. zu einer gegebenenfalls vorgesehenen Transportrichtung des Objektes vorgesehen ist, daß dazu das oder die Magnetrons od. dgl. mit ihren Strahlern parallel zur Längserstreckung des Objektes angeordnet sind und daß der Querschnitt des Hohlleiters rechteckig mit in radialer Richtung längeren Seiten ausgebildet ist.

14. Vorrichtung nach Anspruch 12 oder 13, dadurch gekennzeichnet, daß seitliche Ein- und Austrittsöffnungen des Arbeitsraumes durch metallische Hohlzylinder unterkritischen Durchmessers abgeschlossen sind.

15. Vorrichtung nach einem der vorstehenden Ansprüche, dadurch gekennzeichnet, daß der Hohlleiter durch den Differenzraum zweier konzentrischer Kugeln mit unterschiedlichen Radien gebildet ist und daß Ein. und Auskoppelstellen an zwei gegenüberliegenden Polen angeordnet sind.

16. Vorrichtung nach einem der Ansprüche 12 bis 1 , dadurch gekennzeichnet, daß der Hohlleiter einen quadratischen Querschnitt hat und daß vorzugsweise wenigstens zwei Magnetrons mit zwei voneinander unabhängigen, aufeinander senkrecht stehenden Polarisationsrichtungen vorgesehen sind.

17. Vorrichtung nach einem der Ansprüche 12 bis 16, dadurch gekennzeichnet, daß mehrere ringförmige Hohlleiter nebeneinander angeordnet sind und daß insbesondere Hohlleiter mit seitlich angeordneten Magnetrons gegeneinander drehversetzt sind zur Gewinnung von Platz für die angekoppelten Sender.

18. Vorrichtung nach einem der vorstehenden Ansprüche, dadurch gekennzeichnet, daß der etwa ringförmige Hohlleiter (20) einen rechteckigen Querschnitt mit in radialer Richtung kürzeren Seiten als in axialer Richtung hat und daß der oder die Magnetrons am Umfang des Hohlleiters angeordnet sind.

19. Vorrichtung nach einem der Ansprüche 9 bis 18 dadurch gekennzeichnet, daß zur Beeinflussung der Feldverteilung im Arbeitsraum verstellbare Blindleitwerte in ihn eingekoppelt sind.

20. Vorrichtung nach einem der vorstehenden Ansprüche 9 bis 19, dadurch gekennzeichnet, daß der Arbeitsraum im wesentlichen durch ein Metallrohr mit strahlendurchlässigen aber druckdicht verschlossenen Fenstereinschnitten für die Mikrowellenstrahlung gebildet ist, und daß zur Abdichtung der Fenstereinschnitte ein innen. oder außenseitig am Metallrohr anliegendes Kunststoffrohr, vorzugsweise aus PTFE vorgesehen ist.

21. Vorrichtung nach Anspruch 20, dadurch gekennzeichnet, daß zum Transportieren der Objekte durch den Arbeitsraum eine Transportvorrichtung vorgesehen ist, und daß am Anfang und am Ende des Arbeitsraumes Druckschleusen sowie vor oder in der Austrittsschleuse wenigstens eine Kühlkammer vorgesehen sind.

22. Vorrichtung nach Anspruch 20 oder 21, dadurch gekennzeichnet, daß zur Aufnahme und zum Durchfördern von Objekten durch den rohrförmigen Arbeitsraum kolbenartige Behälter vorgesehen sind, die gegebenenfalls miteinander mechanisch koppelbar und mit Führungsringen versehen sind, und daß die gegenüberliegenden Längsseiten der Behälter offen sind zum Be- und Entladen sowie zur beidseitigen Einstrahlung der Mikrowellenenergie.

23. Vorrichtung nach Anspruch 22 dadurch gekennzeichnet, daß die Behälter (15) stirnseitig durch Metallwände (18) abgeschlossen sind und diametral gegenüberliegende, die Metallwände u. dgl. verbindende Längsstege (35) aufweisen.

24. Vorrichtung nach Anspruch 22 oder 23 dadurch gekennzeichnet, daß die Führungsringe an den Enden der Behälter (15) gleichzeitig als gegen die Innenwand des Führungsrohres anliegende Dichtringe ausgebildet sind.

25. Vorrichtung nach einem der Ansprüche 20 bis 24 , dadurch gekennzeichnet, daß sich die Transportvorrichtung für die Behälter außerhalb des Arbeitsraumes und gegebenenfalls hinter einer Kühlvorrichtung, zum Ent. und Beladen fortsetzt, vorzugsweise in einem zum Anfang des Durchlaufes geschlossenen Kreislauf, und daß außerhalb des Arbeitsraumes liegende Teile des Führungsrohres bereichsweise zum Be- und Entladen Offnungen aufweisen.

26. Vorrichtung nach einem der Ansprüche 20 bis 25 , dadurch gekennzeichnet, daß die Behälter zu einer Kette od. dgl. zusammengefügt und über flexible Kupplungen miteinander verbunden sind, und daß die Transportvorrichtung vorzugsweise symmetrisch liegende Zahnräder aufweist, die in den Außenmantel der Behälter eingreifen unter Überbrückung der Führungsringe u. dgl.

27. Vorrichtung nach einem der Ansprüche 20 bis 26 , dadurch gekennzeichnet, daß das Führungsrohr (19) im Bereich des Arbeitsraumes (6) einen geringfügig größeren lichten Durchmesser (D) als der Außendurchmesser (d) der Behälter (15) aufweist, und daß sich an diesen Arbeitsraum (6) beidseitig Führungsrohrabschnitte (37) mit auf die Behälter im Sinne einer Abdichtung abgestimmten, gegenüber dem Arbeitsraum geringeren lichten Querschnitt anschließen.

## Revendications

1. Procédé pour chauffer des objets emballés hermétiquement, au moyen de micro-ondes sous l'influence d'une surpression externe, à l'aide d'au moins deux rayonnements de haute fréquence,
caractérisé par le fait
que, en vue d'une répartition adéquate du chauffage à l'intérieur de l'objet ou des objets, l'on utilise deux trains d'ondes de sens opposés, qui partent d'extrémités différentes dans le sens longitudinal de l'espace d'opération, se superposent dans l'objet et forment un champ cumulatif, l'objet étant positionné au voisinage d'un maximum d'une onde fixe de haute fréquence du champ cumulatif ; et par le fait que, pour engendrer ces deux trains d'ondes, l'énergie d'un émetteur est scindée dans deux directions.

2. Procédé pour chauffer des objets emballés hermétiquement, au moyen de micro-ondes sous l'influence d'une surpression externe, à l'aide d'au moins deux rayonnements de haute fréquence, caractérisé par le fait que, en vue d'une répartition adéquate du chauffage à l'intérieur de l'objet ou des objets, l'on utilise deux trains d'ondes de sens opposés, qui partent d'extrémités différentes dans le sens longitudinal de l'espace d'opération, se superposent dans l'objet et forment un champ cumulatif, l'objet étant positionné au voisinage d'un maximum d'une onde fixe de haute fréquence du champ cumulatif ; et par le fait que deux émetteurs de fréquence et d'amplitude approximativement identiques, qui fonctionnent en synchronisme avec des polarisations mutuellement perpendiculaires, délivrent les deux trains d'ondes.

3. Procédé selon la revendication 2, caractérisé par le fait que deux émetteurs de fréquence et d'amplitude sensiblement identiques, et de même polarisation, diffusent des rayonnements avec cadence alternée de basse fréquence.

4. Procédé selon la revendication 2, caractérisé par le fait que, en présence de deux émetteurs ou plus, ces derniers sont successivement activés au moyen d'une commande par impulsions.

5. Procédé selon l'une des revendications 1 à 4, caractérisé par le fait que les rayonnements de haute fréquence, et similaires, sont commandés par l'intermédiaire d'une pression et/ou d'un mesurage de la température.

6. Procédé selon l'une des revendications 1 à 5, caractérisé par le fait que les objets devant être chauffés sont guidés par intermittence le long de la zone de rayonnement des micro-ondes ; et par le fait que le cycle d'impulsions est commandé, de préférence, par l'intermédiaire d'une pression et/ou d'une température à l'intérieur de l'espace d'opération.

7. Procédé selon l'une des revendications 1 à 5, caractérisé par le fait que les objets devant être chauffés sont guidés continûment le long de la zone de rayonnement des micro-ondes ; et par le fait que le rayonnement est à chaque fois, de préférence, interrompu dans la zone de transition entre des objets voisins.

8. Procédé selon l'une des revendications 1 à 7, caractérisé par le fait que, à l'issue du chauffage, les objets sont refroidis par délivrance d'un fluide de refroidissement, au moins sous la pression entourant l'objet, de préférence substantiellement de manière directe.

9. Dispositif pour chauffer des objets, au moyen de micro-ondes, sous l'influence d'une surpression externe, ce dispositif présentant au moins un émetteur de micro-ondes, notamment un magnétron diffusant des rayonnements dans un espace d'opération délimité métalliquement et en particulier étanche à la pression, ainsi qu'au moins deux entrées de rayonnements, pour la mise en oeuvre du procédé selon l'une des revendications 1 à 8, caractérisé par le fait que les entrées des rayonnements sont disposées de façon que les deux champs de haute fréquence se superposent dans l'objet (7) en tenant compte de l'absorption de celui-ci en vue d'atteindre le chauffage adéquat, de telle sorte qu'il s'établisse une répartition de chauffage pouvant être préétablie ; et par le fait que l'espace d'opération (6) est dimensionné de façon qu'il se trouve en résonance longitudinale, et les orifices de rayonnement se trouvent au voisinage des extrémités de l'étendue longitudinale.

10. Dispositif selon la revendication 9, caractérisé par le fait que l'espace d'opération (6) présente au moins une entrée (33) et une sortie (34) pour un fluide de refroidissement.

11. Dispositif selon l'une des revendications 9 ou 10, caractérisé par le fait que l'espace d'opération (6) est délimité périphériquement par une plaque de fond métallique (3), ainsi que par une partie métallique de boîtier (8) du type capot, pouvant être placée hermétiquement sur ladite plaque ; par le fait que les orifices d'entrée des rayonnements sont formés par des fenêtres de pénétration (4, 5) qui sont pratiquées dans la plaque de fond, et sont obturées hermétiquement par l'intermédiaire d'un recouvrement (31) perméable aux rayonnements ; et par le fait que les fenêtres se trouvent dans les régions extrêmes de l'étendue longitudinale de l'espace d'opération.

12. Dispositif selon l'une des revendications 9 ou 10, caractérisé par le fait qu'il est prévu au moins un conducteur creux annulaire, muni de zones de couplage et de découplage occupant des positions mutuellement symétriques ; et par le fait que l'espace d'opération étanche à la pression est formé par une partie de ce conducteur creux, près de la zone de découplage.

**13.** Dispositif selon l'une des revendications 9 à 12, caractérisé par le fait que la direction du champ est respectivement prévue parallèlement à l'étendue ou à une direction de transport de l'objet, éventuellement prévue ; par le fait que le ou les magnétron(s), ou éléments similaires, sont en outre disposés de façon que leurs émetteurs soient parallèles à l'étendue longitudinale de l'objet ; et par le fait que la section du conducteur creux est de réalisation rectangulaire, avec des côtés plus longs dans le sens radial.

**14.** Dispositif selon la revendication 12 ou 13, caractérisé par le fait que des orifices latéraux d'entrée et de sortie de l'espace d'opération s'achèvent par des cylindres creux métalliques, d'un diamètre sous-critique.

**15.** Dispositif selon l'une des revendications précédentes, caractérisé par le fait que le conducteur creux est formé par l'espace compris entre deux sphères concentriques, à rayons différents ; et par le fait que des zones de couplage et de découplage se trouvent à deux pôles opposés.

**16.** Dispositif selon l'une des revendications 12 à 14, caractérisé par le fait que le conducteur creux possède une section quadrangulaire ; et par le fait qu'au moins deux magnétrons sont de préférence prévus, avec deux directions de polarisation indépendantes l'une de l'autre et perpendiculaires l'une à l'autre.

**17.** Dispositif selon l'une des revendications 12 à 16, caractérisé par le fait que plusieurs conducteurs creux annulaires sont agencés en juxtaposition ; et par le fait que notamment des conducteurs creux à magnétrons disposés latéralement sont mutuellement décalés par rotation, de manière à gagner de la place pour les émetteurs couplés.

**18.** Dispositif selon l'une des revendications précédentes, caractérisé par le fait que le conducteur creux (20) sensiblement annulaire présente une section rectangulaire ayant des côtés plus courts dans le sens radial que dans le sens axial ; et par le fait que le ou les magnétron(s) se trouvent sur le pourtour du conducteur creux.

**19.** Dispositif selon l'une des revendications 9 à 18, caractérisé par le fait que, en vue d'influencer la répartition du champ dans l'espace d'opération, des susceptances réglables sont couplées dans ce dernier.

**20.** Dispositif selon l'une des revendications précédentes 9 à 19, caractérisé par le fait que l'espace d'opération est formé, pour l'essentiel, par un tube métallique muni de découpes constituant des fenêtres, perméables aux rayonnements, mais obturées avec étanchéité à la pression, pour le rayonnement des micro-ondes ; et par le fait qu'il est prévu, pour assurer l'étanchéité des découpes constituant des fenêtres, un tube en matière plastique, de préférence en PTFE, appliqué intérieurement ou extérieurement sur le tube métallique.

**21.** Dispositif selon la revendication 20, caractérisé par le fait qu'un dispositif de transport est prévu pour acheminer les objets à travers l'espace d'opération ; et par le fait que des sas de pression sont prévus au début et à la fin de l'espace d'opération, au moins une chambre de refroidissement étant prévue devant ou dans le sas de sortie.

**22.** Dispositif selon la revendication 20 ou 21, caractérisé par le fait que des réceptacles du type pistons, prévus pour recevoir et pour acheminer des objets à travers l'espace tubulaire d'opération, peuvent être éventuellement reliés mécaniquement les uns aux autres et sont pourvus d'anneaux de guidage ; et par le fait que les côtés longitudinaux opposés des réceptacles sont ouverts en vue du chargement et du déchargement, ainsi que de la pénétration de l'énergie des micro-ondes, s'opérant des deux côtés.

**23.** Dispositif selon la revendication 22, caractérisé par le fait que les réceptacles (15) s'achèvent par des parois métalliques (18) à leurs faces extrêmes, et présentent des membrures longitudinales (35) diamétralement opposées, qui relient les parois métalliques et éléments similaires.

**24.** Dispositif selon la revendication 22 ou 23, caractérisé par le fait que les anneaux de guidage sont simultanément réalisés, aux extrémités des réceptacles (15), sous la forme d'anneaux d'étanchement appliqués contre la paroi interne du tube de guidage.

25. Dispositif selon l'une des revendications 20 à 24, caractérisé par le fait que le dispositif de transport des réceptacles se prolonge, en vue du déchargement et du chargement, à l'extérieur de l'espace d'opération et, éventuellement, derrière un dispositif de refroidissement, de préférence dans un circuit fermé au début du défilement ; et par le fait que des parties du tube de guidage situées en dehors de l'espace d'opération présentent, par zones, des orifices destinés au chargement et au déchargement.

26. Dispositif selon l'une des revendications 20 à 25, caractérisé par le fait que les réceptacles sont assemblés en une chaîne ou structure similaire, et sont reliés les uns aux autres par l'intermédiaire d'accouplements flexibles ; et par le fait que le dispositif de transport présente des roues dentées qui occupent, de préférence, des positions symétriques et s'engagent dans l'enveloppe externe des réceptacles, en chevauchant les anneaux de guidage et éléments similaires.

27. Dispositif selon l'une des revendications 20 à 26, caractérisé par le fait que le tube de guidage (19) présente, au voisinage de l'espace d'opération (6), un diamètre intérieur (D) légèrement plus grand que le diamètre extérieur (d) des réceptacles (15) ; et par le fait que des tronçons tubulaires de guidage (37), situés de part et d'autre dans la continuité de cet espace d'opération (6), possèdent une section intérieure qui est,plus faible par rapport à l'espace d'opération, et est adaptée aux réceptacles afin d'assurer une étanchéité.

## Claims

1. A method for the microwave heating of objects in an airtight package, with external, excess pressure being brought to bear, by means of at least dual high frequency irradiation,
characterized in that
for a directed distribution of heating within the object (s) use is made of two wave trains of opposite directions, which depart from different ends in the longitudinal direction of the working area and are superposed in the object and form a sum field, the object being positioned in the region of a maximum of a standing high frequency wave of the sum field and that to generate said two wave trains the energy of a transmitter is split in two directions.

2. A method for the microwave heating of objects in an airtight package, with external, excess pressure being brought to bear, by means of at least dual high frequency irradiation,
characterized, in that
for a directed distribution of heating within the object (s) use is made of two wave trains of opposite directions, which depart from different ends in the longitudinal direction of the working area and are superposed in the object and form a sum field, the object being positioned in the region of a maximum of a standing high frequency wave of the sum field and that two transmitters of about the same frequency and amplitude, which operate push-push with mutually per dicular polarization, transmit the two wave trains.

3. The method as claimed in claim 2, characterized in at two transmitters of about the same frequency and amplitude and of the same polarization irradiate in low frequency alternation.

4. The method as claimed in claim 2, characterized in at in the case of two or more transmitters the same are operated successively by means of a pulse control.

5. The method as claimed in any one of claims 1 to 4, characterized in at the high frequency irradiations and the like are controlled by way of pressure and/or temperature measurement.

6. The method as claimed in any one of claims 1 to 5, characterized in at the objects to be heated are intermittently provided along at the point irradiating microwaves and that the pulse rate is preferably controlled by pressure and/or temperature inside the working area.

7. The method as claimed in any one of claims 1 to 5, characterized in at the objects to be heated are continuously guided along at the point irradiating microwaves and that the irradiation in the transitory region between adjacent objects is preferably cut off in each case.

8. The method as claimed in any one of claims 1 to 7, characterized in at after heating the objects are cooled, preferably are essentially directly cooled, by supplying a coolant at least with the pressure surrounding

EP 0 136 453 B2

the object.

9. A device for the microwave heating of objects, with external, excess pressure being brought to bear, the device having at least one microwave transmitter, in particular a magnetron, irradiating in a working area, in particular a pressure-tight, metallically defined working area, and at least two admission points for radiation, for performing the method as claimed' in any one of claims 1 to 8, <u>characterized in that</u> the admission points for radiation are disposed such that for directed heating the two high frequency fields are superposed in the object (7) while taking the absorption of the latter into account in such a manner that there is a predeterminable distribution of heating and that the working area (6) is dimensioned in such a way as to be in longitudinal resonance and the openings for irradiation are in the region of the extremeties of the longitudinal expanse.

10. The device as claimed in claim 9, characterized in that the working area (6) has at least one inlet (33) and one outlet (34) for coolant.

11. The device as claimed in either of claims 9 or 10, characterized in that the working area (6) is defined by a metal base plate (3) as well as a hood-like housing member (8) which is adapted to be set upon said base plate in an airtight manner and is made of metal, that the openings for admitting radiation are formed by window (4,5 ) in the base plate which are closed by an airtight cover (31) transmissible for radiation and that the windows are located at the extremeties of the longitudinal expanse of the working area.

12. The device as claimed in either of claims 9 or 10, characterized in that provision is made for at least one annular waveguide with input and output coupling points lying in symmetrical relationship to one another, and that the pressure-tight working area is formed by part of said waveguide at the output coupling point.

13. The device as claimed in any one of claims 9 to 12, characterized in that the field direction is provided parallel to the expanse of the object and to the direction in which it may be envisaged that the object be conveyed, that the magnetron(s) or the like are disposed with the radiators thereof parallel to the longitudinal expanse of the object and that the cross section of the waveguide is devised to be rectangular with longer sides in the radial direction.

14. The device as claimed in claim 12 or claim 13, characterized in that the lateral inlets and outlets of the working area are closed by metallic hollow cylinders of subcritical diameter.

15. The device as claimed in any one of the preceding claims, characterized in that the waveguide is formed by the difference area of two concentric spheres of different radii and that the input and output coupling points are disposed at two opposite poles.

16. The device as claimed in any one of claims 12 to 1 , characterized in that the waveguide has a quadratic cross section and that preferably at least two magnetrons are provided with polarization directions which are independent of each other and are mutually perpendicular.

17. The device as claimed in any one of claims 12 to 16, characterized in that a plurality of annular waveguides are disposed next to one another and that in particular waveguides with laterally disposed magnetrons are rotationally staggered to gain space for the coupled transmitters.

18. The device as claimed in any one of the preceding claims, characterized in that the approximately annular waveguide (20) has a rectangular cross section with sides shorter in the radial direction than in the axial direction and that the magnetron(s) are disposed at the periphery of the waveguide.

19. The device as claimed in any one of claims 9 to 18, characterized in that to influence the field distribution in the working area adjustable susceptances are coupled therein.

20. The device as claimed in any one of the preceding claims 9 to 19, characterized in that the working area is essentially formed by a metal tube with window slots for the microwave radiation which are transmissible for radiation but are closed in a pressure-tight manner, and that to seal the window slots provision is made for a plastic tube preferably of PTFE resting against the metal tube on the inside or outside.

21. The device as claimed in claim 20, characterized in that a conveying device is provided to convey the objects through the working area, and that provision is made for pressure locks at the beginning and at the end of the working area as well as at least one cooling chamber in front of or in the exit lock.

22. The device as claimed in claim 20 or claim 21, characterized in that piston-like containers are provided for receiving and conveying objects through the tubular working area, said containers possibly being adapted to be coupled together mechanically and being provided with guide rings, and that the opposite longitudinal sides of the containers are open for charging and discharging as well as for irradiating the microwave energy at both sides.

23. The device as claimed in claim 22, characterized in at the containers (15) are closed at the end faces by metal walls (18) and have diametrically opposed longitudinal webs (35) connecting the metal walls and the like.

24. The device as claimed in claim 22 or claim 23, characterized in at the guide rings at the ends of the containers (15) at the same time take the form of sealing rings resting against the inside wall of the guide tube.

25. The device as claimed in any one of claims 20 to 24, characterized in that the conveying device for the containers continues for charging and discharging outside the working area and behind any cooling device provided, preferably in a circuit closed at the beginning of the passage, and that parts of the guide to which lie outside the working area have openings in areas for charging and discharging.

26. The device as claimed in any one of claims 20 to 25, characterized in that the containers are joined to form a chain or the like and are interconnected by way of flexible couplings, and that the conveying device has preferably symmetrically disposed toothed wheels which engage into the outer jacket of the containers while bridging the guide rings and the like.

27. The device as claimed in any one of claims 20 to 26, characterized in that in the region of the working area ( 6 ) the guide to (19) has a slightly larger inside diameter (D) than the outside diameter (d) of the containers (15), and that guide tube portions (37) are joined to said working area ( 6 ) at both sides and have an inside cross section which is smaller than the working area and is adapted to the containers to act as a seal.

*Fig.1*

EP 0 136 453 B2

Fig.2

Fig.3

Fig.4

Fig.5

Fig.6

*Fig. 7*

Fig. 8

Fig. 9

EP 0 136 453 B2